# EUROPÄISCHE PATENTSCHRIFT

(11) **EP 0 432 128 B1**
(45) Veröffentlichungstag und Bekanntmachung des Hinweises auf die Patenterteilung: **26.04.1995**
(21) Anmeldenummer: 90890307.3
(22) Anmeldetag: 26.11.1990
(51) Int. Cl.: B22D 11/04, B22D 11/20, G01F 23/28

(54) **Stranggiesskokille**
Continuous casting mold arrangement
Lingotière pour la coulée continue

(30) Priorität: 04.12.1989 AT 2758/89
(43) Veröffentlichungstag der Anmeldung: 12.06.1991
(73) Patentinhaber: VOEST-ALPINE Industrieanlagenbau GmbH, A-4020 Linz (AT)
(72) Erfinder: Schilcher, Klaus, A-4020 Linz (AT)
(74) Vertreter: Wolfram, Gustav, Dipl.-Ing.

(56) Entgegenhaltungen:
- EP-A- 0 063 072
- EP-A- 0 157 255
- GB-A- 1 086 276
- REGELUNGSTECHNISCHE PRAXIS, Heft 7, 1974, Seiten 176-180; P. RÖDDER: "DieRadioaktivität und ihre Anwendung in der Mess- und Regelungstechnik"
- SIEMENS REVIEW, Band 45, Nr. 8, August 1978, Seiten 361-363; G. KOSCHEK et al.:"Casting mould level control system for slabbing mills"

## Beschreibung

Die Erfindung betrifft eine Stranggießkokille, insbesondere Stahlstranggießkokille, mit einen Kokillenhohlraum umgebenden Seitenwänden und einem die Seitenwände umgebenden Kühlmantel, wobei zwischen den Seitenwänden und dem Kühlmantel ein von Kühlmittel durchströmter Kühlmittelhohlraum gebildet ist, und mit einer Niveaumeßeinrichtung, die von einer im oberen Bereich der Stranggießkokille seitlich des Kokillenhohlraumes liegenden Strahlenquelle und einem ebenfalls im oberen Bereich der Stranggießkokille und seitlich des Kokillenhohlraumes liegenden Strahlendetektor gebildet ist.

Eine Stranggießkokille dieser Art ist aus der DE-B - 27 16 271 bekannt. Die ein größeres Volumen einnehmende Strahlenquelle befindet sich hierbei im Abstand von der den Kokillenhohlraum begrenzenden Seitenwand, um den Kühlmittelstrom entlang dieser Seitenwand nicht zu behindern. Durch das zwischen der Strahlenquelle und der benachbarten Seitenwand der Stranggießkokille strömende Kühlmittel kommt es zu einer relativ starken Abschirmung der Strahlenquelle, so daß, um ein einwandfreies Meßergebnis zu erhalten, ein relativ starker Strahler eingebaut werden muß.

Diese Problematik tritt noch wesentlich verstärkt auf, wenn der Strahler infolge einer im Kühlmittelhohlraum angeordneten elektromagnetischen Rühreinrichtung außerhalb des Kühlmantels angeordnet ist, da dann die Entfernung zwischen Strahlenquelle und Strahlendetektor noch wesentlich vergrößert ist und die Strahlen einen relativ langen Weg durch das eine abschirmende Wirkung hervorrufende Kühlmittel zurücklegen müssen.

Die Erfindung stellt sich die Aufgabe, eine Stranggießkokille der eingangs beschriebenen Art zu schaffen, bei der mit einer relativ kleinen Strahlenquelle und einer demgemäß sehr geringen Strahlenbelastung für das Gießpersonal das Auslangen gefunden wird.

Diese Aufgabe wird bei einer Kokille der eingangs genannten Art erfindungsgemäß dadurch gelöst, daß in dem den Kühlmittelhohlraum durchsetzenden Bereich des Strahlenganges mindestens ein Kühlmittelverdrängungskörper vorgesehen ist, der zumindest in seinem durchstrahlten Bereich eine mittlere Dichte geringer als die des Kühlmittels aufweist. Dieser Kühlmittelverdrängungskörper braucht nur entsprechend dem Strahlengang bemessen zu sein, sodaß er nur sehr schmal zu sein braucht und daher bis nahezu unmittelbar zur den Kokillenhohlraum begrenzenden Seitenwand ragen kann, ohne den Kühlmittelstrom zu behindern. Hierdurch wird eine gleichmäßige Kühlung der Kokille im diesbezüglich empfindlichen Bereich des Gießspiegels der Kokille sichergestellt

Vorzugsweise ist ein Kühlmittelverdrängungskörper zwischen der Strahlenquelle und der Seitenwand des Kokillenhohlraumes und ein weiterer Kühlmittelverdrängungskörper zwischen dem Strahlendetektor und der Seitenwand des Kokillenhohlraumes angeordnet. Hierdurch läßt sich mit besonders schwachen Strahlenquellen das Auslangen finden.

Zweckmäßig weist der Kühlmittelverdrängungskörper ein spezifisches Gewicht geringer als das des Kühlmittels auf, so daß der Kühlmittelverdrängungskörper nahezu keine abschirmende Wirkung entfaltet.

Vorzugsweise weist der Kühlmittelverdrängungskörper eine dem Kühlmittelkreislauf entsprechende Druckfestigkeit auf und ist der Kühlmittelverdrängungskörper kühlmitteldicht ausgeführt.

Eine bevorzugte Ausführungsform ist dadurch gekennzeichnet, daß der Kühlmittelverdrängungskörper aus druckfestem Schäumglas und einem das Schäumglas umgebenden kühlmitteldichten Mantel gebildet ist. Schäumglas weist ein geringes spezifisches Gewicht auf und ist nicht nur sehr druckfest, sondern auch korrosionsbeständig, wasserdampf- und gasdicht und kann daher auch keine Flüssigkeiten absorbieren, wodurch es in hervorragender Weise als Material für den Kühlmittelverdrängungskörper geeignet ist.

Eine weitere bevorzugte Ausführungsform ist dadurch gekennzeichnet, daß der Kühlmittelverdrängungskörper aus Betonperlit gebildet ist. Betonperlit weist ebenfalls ein geringes spezifisches Gewicht auf, ist unbegrenzt haltbar und wasserdicht.

Zweckmäßig weist der Kühlmittelverdrängungskörper eine faserarmierte Kunststoffummantelung auf Polyesterbasis auf.

Gemäß einer weiteren bevorzugten Ausführungsform ist der Kühlmittelverdrängungskörper von einem kühlmitteldichten und mit Gas gefüllten Behälter gebildet, wobei zweckmäßig die Gasfüllung des Kühlmittelverdrängungskörpers dem Druck des Kühlmittelkreislaufes anpaßbar ist.

Vorteilhaft ist ein Mantel des Kühlmittelverdrängungskörpers aus rostfreiem Stahlblech gebildet.

Da der Kühlmittelverdrängungskörper nur einen sehr geringen Querschnitt aufweist, ist es möglich, daß der Kühlmantel im Bereich des Kühlmittelverdrängungskörpers eine gegenüber den übrigen Bereichen verminderte Wandstärke aufweist.

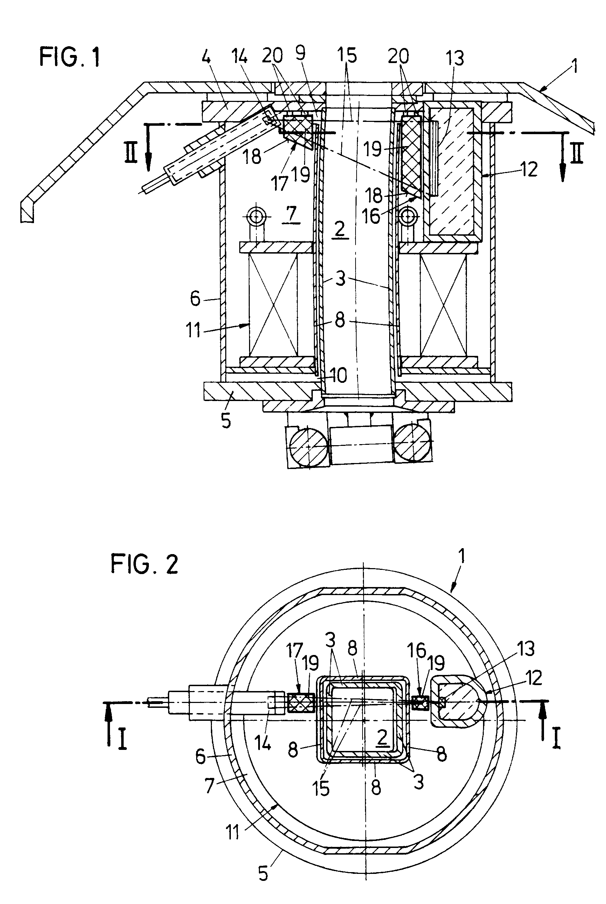

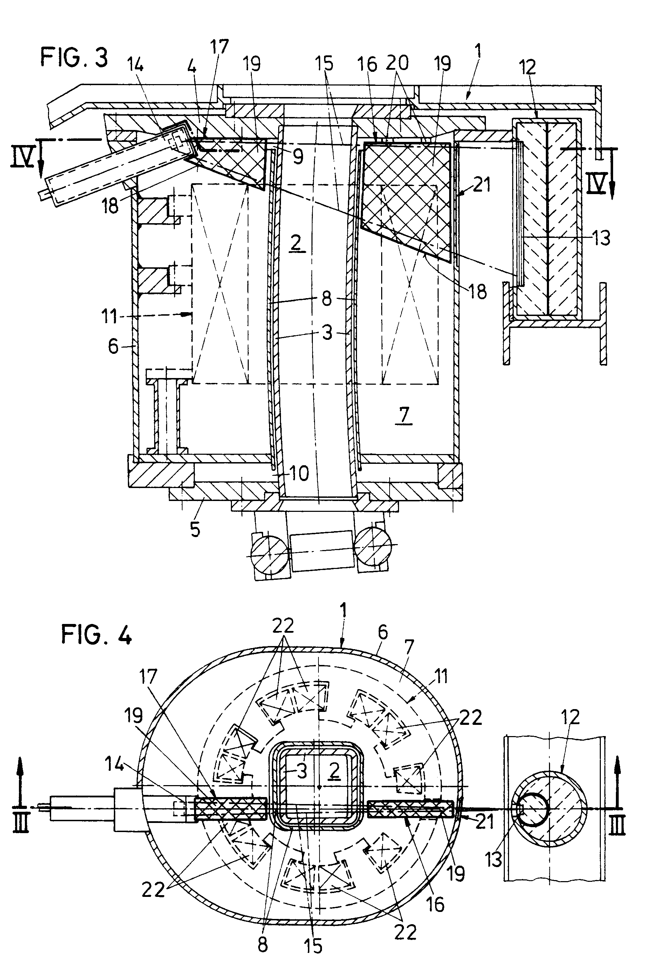

Die Erfindung ist nachfolgend anhand zweier Ausführungsbeispiele näher erläutert, wobei Fig. 1 einen schematischen, parallel zur Ebene der Kokillenachse geführten Schnitt gemäß der Linie I-I in Fig. 2 durch eine Stranggießkokille nach einer ersten Ausführungsform veranschaulicht. Fig. 2 zeigt einen ebenfalls schematisch dargestellten Schnitt gemäß der Linie II-II der Fig. 1. Fig. 3 zeigt in zu Fig. 1 analoger Darstellung eine weitere Ausführungsform einer Stranggießkokille, Fig. 4 einen analog zu Fig. 2 nach den Linien IV-IV der Fig. 3 geführten Schnitt.

Wie aus Fig. 1 und 2 ersichtlich ist, weist die Stranggießkokille 1, die zum Gießen eines Stahlstranges mit Knüppelquerschnitt bestimmt ist, einen etwa quadratischen Kokillenhohlraum 2 auf, der von Seitenwänden 3 begrenzt ist. Die Seitenwände 3 sind im oberen und unteren Bereich der Kokille dicht mit Stirnplatten 4, 5 verbunden. Ein Kühlmantel 6, der den Außenumfang der beiden Stirnplatten 4, 5 dicht verbindet, begrenzt zwischen sich, den Seitenwänden 3 sowie den Stirnplatten 4, 5 einen von einem Kühlmedium, wie Wasser, durchströmten Kühlmittelhohlraum 7.

Um an den Seitenwänden 3 der Stranggießkokille 1 eine definierte Strömung des Kühlmittelflusses zu erzielen, ist die Kokille im geringen Abstand der Seitenwände 3 mit zu den Seitenwänden 3 parallelen Umlenkwänden 8 ausgestattet, die gegenüber der oberen und unteren Stirnplatte 4, 5 einen Ringspalt 9, 10 freilassen, so daß das Kühlmittel gezwungen ist, entlang der Seitenwände 3 zu strömen.

Der Kühlmittelhohlraum 7 ist so bemessen, daß in seinem Inneren eine elektromagnetische Rühreinrichtung 11 Platz findet. Diese ist im unteren Bereich der Stranggießkokille 1 angeordnet. Im oberen Bereich der Stranggießkokille 1 ist im Inneren des Kühlmittelhohlraumes 7 eine Strahlenquelle 12 eingebaut, die einen radioaktiven Stab-Strahler 13 aufweist. Gegenüberliegend zu dieser Strahlenquelle 12 ist ein Strahlendetektor 14, wie ein Zählrohr, angeordnet, welches ebenfalls innerhalb des Kühlmittelhohlraumes 7 liegt. Die Strahlenquelle 12 und der Strahlendetektor 14 bilden eine Niveaumeßeinrichtung zur Bestimmung der Höhe des Gießspiegels.

Um eine Abschirmung bzw. Schwächung der radioaktiven Strahlen infolge des im Kühlmittelhohlraum 7 strömenden Kühlmittels zu vermeiden, ist in dem Bereich des Strahlenganges der radioaktiven Strahlung, der durch die Linien 15 angedeutet ist, zwischen der Umlenkwand 8 und der Strahlenquelle 12 sowie in dem Bereich zwischen der Umlenkwand 8 und dem Strahlendetektor 14 jeweils ein der geometrischen Form des Strahlenganges angepaßter und somit keilförmig gestalteter, schmaler Kühlmittelverdrängungskörper 16, 17 eingesetzt. Diese Kühlmittelverdrängungskörper 16, 17 weisen ein sehr geringes Raumgewicht auf; sie sind von einem wasserdichten Mantel 18 gebildet, der mit Schäumglas 19 gefüllt ist. Derwasserdichte Mantel 18 besteht beispielsweise aus rostfreiem Stahlblech. Der Mantel 18 kann sehr dünnwandig gestaltet sein, da das Schäumglas 19 genügend druckfest ist, um dem Druck des Kühlmittels standzuhalten.

Der Mantel 18 des Kühlmittelverdrängungskörpers 16 bzw. 17 könnte auch gasgefüllt sein, wobei jedoch entweder die Gasfüllung einen Druck aufweist, der dem Kühlmitteldruck entspricht, oder der Mantel des Kühlmittelverdrängungskörpers eine etwas größere Wandstärke aufweist, so daß er ohne Druckgasfüllung dem Druck des Kühlmittels standhalten kann. In diesem Fall sind insbesondere die großflächigen und vertikal gerichteten Seitenwände des Kühlmittelverdrängungskörpers 16 bzw. 17 verstärkt ausgebildet, was für die unerwünschte Abschirmung der radioaktiven Strahlung jedoch ohne Belang ist, da diese seitlich außerhalb des für die Gießspiegelmessung wesentlichen Bereiches 15 des Strahlenganges der radioaktiven Strahlung liegen.

Von Bedeutung ist, daß der Kühlmittelverdrängungskörper 16 bzw. 17 in dem Bereich, in dem er durchstrahlt wird, nur ein geringes spezifisches Gewicht aufweist, da hiervon die Größe der Strahlenquelle abhängt.

Die Kühlmittelverdrängungskörper 16, 17 sind zweckmäßig mit am Mantel 18 angeordneten Halterungen 20 ausgestattet, die an einer Wand der Stranggießkokille, insbesondere an der oberen Stirnwand 4, befestigbar sind.

Gemäß der in den Fig. 3 und 4 dargestellten Ausführungsform befindet sich die Strahlenquelle 12 außerhalb des Kühlmittelhohlraumes 7, wodurch sich ein besonders langer Weg der radioaktiven Strahlung durch den Kühlmittelhohlraum 7 ergibt. Wie aus Fig. 3 ersichtlich ist, reicht der Kühlmittelverdrängungskörper 16 in diesem Fall von dem außenseitigen Kühlmantel 6 der Stranggießkokille 1 bis nahezu zur Umlenkwand 8, so daß eine Schwächung der radioaktiven Strahlung infolge des Kühlmittels wirkungsvoll verhindert wird.

In dem Bereich 21, in dem der Kühlmantel 6 an den Kühlmittelverdrängungskörper 16 angrenzt, ist der Kühlmantel 6 besonders dünnwandig gestaltet, so daß eine Abschwächung der radioaktiven Strahlung infolge des Kühlmantels 6 ebenfalls sehr gering gehalten werden kann.

Mit strichlierten Linien ist in den Fig. 3 und 4 eine elektromagnetische Rühreinrichtung 11 angedeutet, deren Rührspulen 22, wie aus Fig. 4 hervorgeht, zweckmäßig geringfügig asymmetrisch um den Umfang der Seitenwände 3 der Stranggießkokille 1 angeordnet sind, um den Strahlendurchgang der radioaktiven Strahlung nicht zu behindern.

Die Kühlmittelverdrängungskörper sind nicht nur bei Knüppelkokillen, sondern auch bei Kokillen zum Gießen eines Stranges mit Brammenquerschnitt einsetzbar, u.zw. unabhängig davon, ob ein elektromagnetischer Rührer im Kokillenbereich vorgesehen ist oder nicht.

## Patentansprüche

1. Stranggießkokille (1), insbesondere Stahlstranggießkokille, mit einen Kokillenhohlraum (2) umgebenden Seitenwänden (3) und einem die Seitenwände (3) umgebenden Kühlmantel (6), wobei zwischen den Seitenwänden (3) und dem Kühlmantel (6) ein von Kühlmittel durchströmter Kühlmittelhohlraum (7) gebildet ist, und mit einer Niveaumeßeinrichtung, die von einer im oberen Bereich der Stranggießkokille (1) seitlich des Kokillenhohlraumes (2) liegenden Strahlenquelle (12) und einem ebenfalls im oberen Bereich der Stranggießkokille (1) und seitlich des Kokillenhohlraumes (2) liegenden Strahlungsdetektor (14) gebildet ist, dadurch gekennzeichnet, daß in dem den Kühlmittelhohlraum (7) durchsetzenden Bereich (15) des Strahlenganges mindestens ein Kühlmittelverdrängungskörper (16, 17) vorgesehen ist, der zumindest in seinem durchstrahlten Bereich eine mittlere Dichte geringer als die des Kühlmittels aufweist.

2. Stranggießkokille nach Anspruch 1, dadurch gekennzeichnet, daß ein Kühlmittelverdrängungskörper (16) zwischen der Strahlenquelle (12) und der Seitenwand (3) des Kokillenhohlraumes (2) und ein weiterer Kühlmittelverdrängungskörper (17) zwischen dem Strahlendetektor (14) und der Seitenwand (3) des Kokillenhohlraumes (2) angeordnet ist.

3. Stranggießkokille nach Anspruch 1 oder 2,
dadurch gekennzeichnet, daß der Kühlmittelverdrängungskörper (16, 17) eine dem Kühlmittelkreislauf entsprechende Druckfestigkeit aufweist.

4. Stranggießkokille nach einem oder mehreren der Ansprüche 1 bis 3, dadurch gekennzeichnet, daß der Kühlmittelverdrängungskörper (16, 17) kühlmitteldicht ausgeführt ist.

5. Stranggießkokille nach einem oder mehreren der Ansprüche 1 bis 4, dadurch gekennzeichnet, daß der Kühlmittelverdrängungskörper (16, 17) aus druckfestem Schäumglas und einem das Schäumglas (19) umgebenden kühlmitteldichten Mantel (18) gebildet ist.

6. Stranggießkokille nach einem oder mehreren der Ansprüche 1 bis 4, dadurch gekennzeichnet, daß der Kühlmittelverdrängungskörper (16, 17) aus Betonperlit gebildet ist.

7. Stranggießkokille nach einem oder mehreren der Ansprüche 1 bis 4, dadurch gekennzeichnet, daß der Kühlmittelverdrängungskörper (16, 17) eine faserarmierte Kunststoffummantelung auf Polyesterbasis aufweist.

8. Stranggießkokille nach einem oder mehreren der Ansprüche 1 bis 4, dadurch gekennzeichnet, daß der Kühlmittelverdrängungskörper (16, 17) von einem kühlmitteldichten und mit Gas gefüllten Behälter gebildet ist.

9. Stranggießkokille nach Anspruch 8, dadurch gekennzeichnet, daß die Gasfüllung des Kühlmittelverdrängungskörpers (16, 17) dem Druck des Kühlmittelkreislaufes anpaßbar ist.

10. Stranggießkokille nach einem oder mehreren der Ansprüche 1 bis 9, dadurch gekennzeichnet, daß ein Mantel (18) des Kühlmittelverdrängungskörpers (16, 17) aus rostfreiem Stahlblech gebildet ist.

11. Stranggießkokille nach einem oder mehreren der Ansprüche 1 bis 10, dadurch gekennzeichnet, daß der Kühlmantel (6) im Bereich (21) des Kühlmittelverdrängungskörpers (16) eine gegenüber den übrigen Bereichen verminderte Wandstärke aufweist.

## Claims

1. A continuous casting mould (1), in particular a continuous casting mould for steel, comprising side walls (3) enclosing a mould cavity (2) and a cooling jacket (6) surrounding the side walls (3), a coolant cavity (7) flowed through by coolant being formed between the side walls (3) and the cooling jacket (6), and having a level measuring means formed by a radiation source (12) provided in the upper region of the continuous casting mould (1) lateral of the mould cavity (2) and by a radiation detector (14) also provided in the upper region of the continuous casting mould (1) and lateral of the mould cavity (2), characterised in that at least one coolant displacement body (16, 17) is provided in the region (15) of the radiation path passing the coolant cavity (7), which coolant displacement body has at least in its radiation-passed region a mean density which is lower than that of the coolant.

2. A continuous casting mould according to claim 1, characterised in that a coolant displacement body (16) is arranged between the radiation source (12) and the side wall (3) of the mould cavity (2), and a further coolant displacement body (17) is arranged between the radiation detector (14) and the side wall (3) of the mould cavity (2).

3. A continuous casting mould according to claim 1 or 2, characterised in that the coolant displacement body (16, 17) has a compressive strength corresponding to the coolant circuit.

4. A continuous casting mould according to one or several of claims 1 to 3, characterised in that the coolant displacement body (16, 17) is designed to be coolant-proof.

5. A continuous casting mould according to one or several of claims 1 to 4, characterised in that the coolant displacement body (16, 17) is made of compression-proof foamed glass and a coolant-proof jacket (18) surrounding the foamed glass (19).

6. A continuous casting mould according to one or several of claims 1 to 4, characterised in that the coolant displacement body (16, 17) is made of cement perlite.

7. A continuous casting mould according to one or several of claims 1 to 4, characterised in that the coolant displacement body (16, 17) has a fibre-reinforced polyester-based synthetic jacket.

8. A continuous casting mould according to one or several of claims 1 to 4, characterised in that the coolant displacement body (16, 17) is formed by a coolant-proof, gas-filled container.

9. A continuous casting mould according to claim 8, characterised in that the gas filling of the coolant displacement body (16, 17) is adaptable to the pressure of the coolant circuit.

10. A continuous casting mould according to one or several of claims 1 to 9, characterised in that a jacket (18) of the coolant displacement body (16, 17) is made of stainless steel plate.

11. A continuous casting mould according to one or several of claims 1 to 10, characterised in that in the region (21) of the coolant displacement body (16), the cooling jacket (6) has wall thickness that is reduced as compared to the remaining regions thereof.

## Revendications

1. Lingotière de coulée continue (1), notamment lingotière de coulée continue d'acier, comprenant des parois latérales (3) qui entourent une cavité (2) de lingotière, et une enveloppe de refroidissement (6), dans laquelle une cavité de fluide de refroidissement (7) parcourue par un fluide de refroidissement est formée entre les parois latérales (3) et l'enveloppe de refroidissement (6), et équipée d'un dispositif de mesure du niveau qui est composé d'une source de rayonnement (12) située dans la région supérieure de la lingotière de coulée continue (1), latéralement à la cavité (2) de la lingotière, et un détecteur de rayonnement (14), également situé dans la région supérieure de la lingotière de coulée continue (1) et latéralement à la cavité (2) de la lingotière, caractérisée en ce que, dans la région (15) du trajet du rayonnement qui traverse la cavité (7) de fluide de refroidissement, est prévu au moins un corps (16, 17) de déplacement du fluide de refroidissement qui présente, au moins dans sa région traversée par le rayonnement, une densité moyenne inférieure à celle du fluide de refroidissement.

2. Lingotière de coulée continue selon la revendication 1, caractérisée en ce qu'un corps (16) de déplacement du fluide de refroidissement est interposé entre la source de rayonnement (12) et la paroi latérale (3) de la cavité (2) de la lingotière, et un autre corps (17) de déplacement du fluide de refroidissement est interposé entre le détecteur de rayonnement (14) et la paroi latérale (3) de la cavité (2) de la lingotière.

3. Lingotière de coulée continue selon la revendication 1 ou 2,
caractérisée en ce que le corps (16, 17) de déplacement du fluide de refroidissement présente une résistance à la compression correspondant au circuit de fluide de refroidissement.

4. Lingotière de coulée continue selon une ou plusieurs des revendications 1 à 3, caractérisée en ce que le corps (16, 17) de déplacement du fluide de refroidissement est réalisé sous une forme étanche au fluide de refroidissement.

5. Lingotière de coulée continue selon une ou plusieurs des revendications 1 à 4, caractérisée en ce que le corps (16, 17) de déplacement du fluide de refroidissement est composé d'une mousse de verre résistante à la compression et d'une enveloppe (17) étanche au fluide de refroidissement, qui entoure la mousse de verre (19).

6. Lingotière de coulée continue selon une ou plusieurs des revendications 1 à 4, caractérisée en ce que le corps (16, 17) de déplacement du fluide de refroidissement est composé d'un béton de perlite.

7. Lingotière de coulée continue selon une ou plusieurs des revendications 1 à 4, caractérisée en ce que le corps (16, 17) de déplacement du fluide de refroidissement présente un gainage en matière plastique armée de fibre à base de polyester.

8. Lingotière de coulée continue selon une ou plusieurs des revendications 1 à 4, caractérisée en ce que le corps (16, 17) de déplacement du fluide de refroidissement est formé d'un récipient étanche au fluide de refroidissement et rempli de gaz.

9. Lingotière de coulée continue selon la revendication 8, caractérisée en ce que le remplissage de gaz du corps (16, 17) de déplacement du fluide de refroidissement peut être adapté à la pression du circuit de fluide de refroidissement.

10. Lingotière de coulée continue selon une ou plusieurs des revendications 1 à 9, caractérisée en ce qu'une enveloppe (18) du corps (16, 17) de déplacement du fluide de refroidissement est formée en tôle d'acier inoxydable.

11. Lingotière de coulée continue selon une ou plusieurs des revendications 1 à 10, caractérisée en ce que, dans la région (21) du corps (16) de déplacement du fluide de refroidissement, l'enveloppe de refroidissement (6) présente une épaisseur de paroi réduite comparativement aux autres régions.
